# FASCICULE DE BREVET EUROPEEN

(11) **EP 3 384 193 B1**
(45) Date de publication et mention de la délivrance du brevet: **05.02.2020**
(21) Numéro de dépôt: 16819141.9
(22) Date de dépôt: 01.12.2016
(51) Int. Cl.: F16L 19/00

(54) **DISPOSITIF DE LIMITATION DE DESSERRAGE D'UN ECROU DANS UNE TURBOMACHINE**
VORRICHTUNG ZUR BEGRENZUNG DES LÖSENS EINER MUTTER IN EINEM TURBINENMOTOR
DEVICE FOR LIMITING THE LOOSENING OF A NUT IN A TURBINE ENGINE

(30) Priorité: 03.12.2015 FR 1561809
(43) Date de publication de la demande: 10.10.2018
(73) Titulaire: Safran Helicopter Engines, 64510 Bordes (FR)
(72) Inventeur: CLADIERE, Mathieu, 64000 Pau (FR); ZORDAN, Cédric, Roger, 64510 Narcastet (FR); VERGEZ, Stéphane, 64460 Aast (FR)
(74) Mandataire: Brevalex
(86) Numéro de dépôt international: PCT/FR2016/053163
(87) Numéro de publication internationale: WO 2017/093671

(56) Documents cités:
- DE-A1- 2 903 706
- FR-A1- 2 901 331

## Description

### DOMAINE TECHNIQUE

L'invention se rapporte aux turbomachines pour aéronef telles que les turboréacteurs et les turbopropulseurs. Plus précisément, l'invention concerne un dispositif de limitation de desserrage d'un écrou dans une turbomachine.

### ÉTAT DE LA TECHNIQUE ANTÉRIEURE

Certaines tuyauteries d'huile sont raccordées à un orifice débouchant dans un carter de turbomachine par un écrou.

Afin de limiter le desserrage de l'écrou, il est connu d'utiliser un fil à freiner qui est enroulé autour de l'écrou. Un tel fil à freiner est parfois difficile à installer, du fait notamment de l'encombrement à proximité du carter de turbomachine.

L'écrou peut aussi être freiné en utilisant des filets rapportés auto-freineurs. De tels filets peuvent générer des couples de serrage incompatible avec la tenue mécanique des pièces avec lesquelles ils sont en interface mécanique.

Du document FR 2 901 331 A1 est connu un dispositif d'immobilisation en rotation d'un raccord vissé.

### EXPOSÉ DE L'INVENTION

L'invention vise à résoudre au moins partiellement les problèmes rencontrés dans les solutions de l'art antérieur.

A cet égard, l'invention a pour objet un ensemble pour turbomachine, comprenant un support comprenant une partie mâle filetée, ainsi qu'un organe en saillie du support et solidaire du support. L'ensemble comprend en outre un écrou enserrant la partie mâle et un dispositif de limitation de desserrage de l'écrou relativement au support.

Selon l'invention, le dispositif de limitation de desserrage comprend un organe d'arrêt en rotation et un organe d'arrêt en translation,

l'organe d'arrêt en rotation étant configuré pour limiter une rotation de l'écrou relativement au support,

l'organe d'arrêt en rotation comprenant une surface interne configurée pour limiter une rotation de l'écrou par coopération de forme avec une surface externe de l'écrou,

l'organe d'arrêt en rotation comprenant une première butée anti-rotation configurée pour buter en rotation contre l'organe en saillie, de manière à limiter une rotation de l'organe d'arrêt en rotation relativement au support, et

l'organe d'arrêt en translation étant configuré pour limiter une translation de l'organe d'arrêt en rotation relativement à l'écrou, selon l'axe de l'écrou; voir le libellé de la revendication 1.

Grâce à l'invention, le dispositif de limitation de desserrage limite le desserrage intempestif de l'écrou, tout en facilitant l'installation du dispositif de limitation de desserrage.

Il est plus facile à mettre en place autour de l'écrou qu'un fil à freiner. La première butée anti-rotation permet aussi de repérer plus facilement le sens de montage correct du dispositif de limitation de desserrage.

Le dispositif de limitation de desserrage est relié mécaniquement à l'écrou de manière détachable, ce qui facilite des opérations de maintenance de l'ensemble, après son installation dans une turbomachine.

Enfin, la coopération de forme entre la surface interne de l'organe d'arrêt en rotation et la surface externe de l'écrou limite les erreurs de montage du dispositif de limitation de desserrage.

L'invention peut comporter de manière facultative une ou plusieurs des caractéristiques suivantes combinées entre elles ou non.

Avantageusement, l'organe d'arrêt en rotation comprend une deuxième butée anti-rotation configurée pour buter en rotation contre l'organe en saillie, de manière à ce que l'organe en saillie soit situé entre la première butée anti-rotation et la deuxième butée anti-rotation.

Selon une forme de réalisation avantageuse, l'étendue angulaire entre les deux butées anti-rotation est supérieure ou égale à la somme de l'étendue angulaire d'au moins une partie de l'organe en saillie et d'un angle entre deux côtés consécutifs de l'organe d'arrêt en rotation.

Avantageusement, la surface interne est polygonale.

De préférence, la surface interne est multi-hexagonale pour coopérer avec une surface externe hexagonale de l'écrou.

Selon une particularité de réalisation, l'organe d'arrêt en rotation comprend une ouverture pour loger au moins partiellement l'organe d'arrêt en translation. Cette ouverture est de préférence une gorge.

Selon une autre particularité de réalisation, l'organe d'arrêt en translation comprend un organe de serrage.

Avantageusement, l'organe de serrage comprenant une goupille, une agrafe, un clip et/ou un jonc.

L'invention porte également sur une turbomachine comprenant un ensemble tel que défini ci-dessus, l'écrou raccordant un conduit d'huile à une partie mâle qui est solidaire d'un carter de turbomachine.

De préférence, la turbomachine est une turbomachine d'aéronef tel qu'un turboréacteur ou un turbopropulseur.

L'invention se rapporte aussi à un procédé de montage d'un dispositif de limitation de desserrage d'un ensemble tel que défini ci-dessus, comprenant :
une étape d'insertion de l'organe d'arrêt en rotation autour de l'écrou et de montage de la première butée anti-rotation en butée contre l'organe en saillie, et
une étape de montage de l'organe d'arrêt en translation, pour que l'organe d'arrêt en translation limite une translation de l'organe d'arrêt en rotation relativement à l'écrou selon l'axe de l'écrou.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'un ensemble pour turbomachine comprenant un dispositif de limitation de desserrage d'un écrou, selon un premier mode de réalisation de l'invention ;
- la figure 2 est une représentation schématique partielle en coupe longitudinale d'un premier conduit d'huile raccordé à un deuxième conduit d'huile par un écrou, au sein de l'ensemble selon le premier mode de réalisation ;
- la figure 3 est une représentation schématique partielle en vue de dessus de l'ensemble selon le premier mode de réalisation;
- la figure 4 illustre l'insertion d'un organe d'arrêt en rotation autour de l'écrou, au sein de l'ensemble selon le premier mode de réalisation ;
- la figure 5 illustre la position de l'organe d'arrêt en rotation lors du serrage de l'écrou, au sein de l'ensemble selon le premier mode de réalisation ;
- la figure 6 illustre le montage de l'organe d'arrêt en translation, une fois que l'organe d'arrêt en rotation a été mis en place, dans l'ensemble selon le premier mode de réalisation ;
- la figure 7 représente une turbomachine d'aéronef comprenant un ensemble selon le premier mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

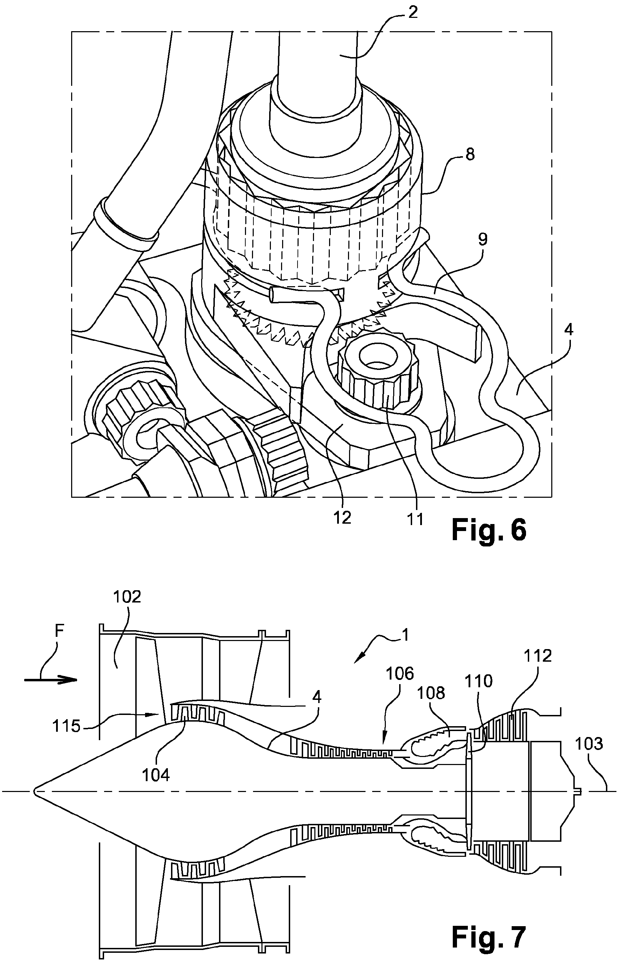

La figure 7 représente une turbomachine 1 d'aéronef qui est ici un turboréacteur à double flux et à double corps.

La turbomachine 1 présente un axe longitudinal 103 autour duquel s'étendent ses différents composants. Elle comprend, d'amont en aval selon une direction principale d'écoulement des gaz représentée par la flèche F, une soufflante 102, un compresseur basse pression 104, un compresseur haute pression 106, une chambre de combustion 108, une turbine haute pression 110 et une turbine basse pression 112.

Le compresseur basse pression 104, le compresseur haute pression 106, la chambre de combustion 108, la turbine haute pression 110 et la turbine basse pression 112 sont délimitées par des carters 4 pour former une veine primaire 115 de la turbomachine 1.

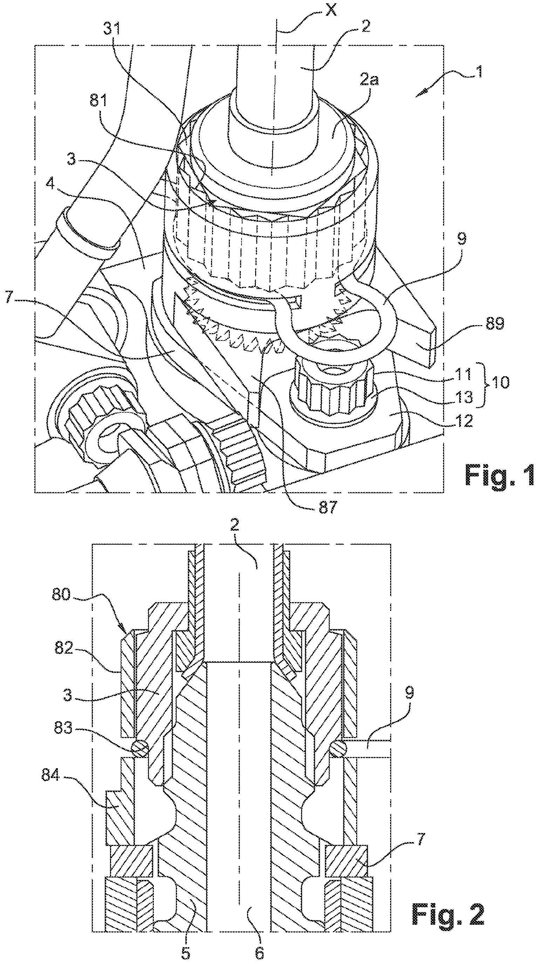

Les figures 1 à 3 représentent un ensemble pour turbomachine 1 d'aéronef qui comporte le carter 4 de turbomachine. Ce carter 4 est un carter amont ou un carter intermédiaire qui participe à la délimitation de la veine primaire 115.

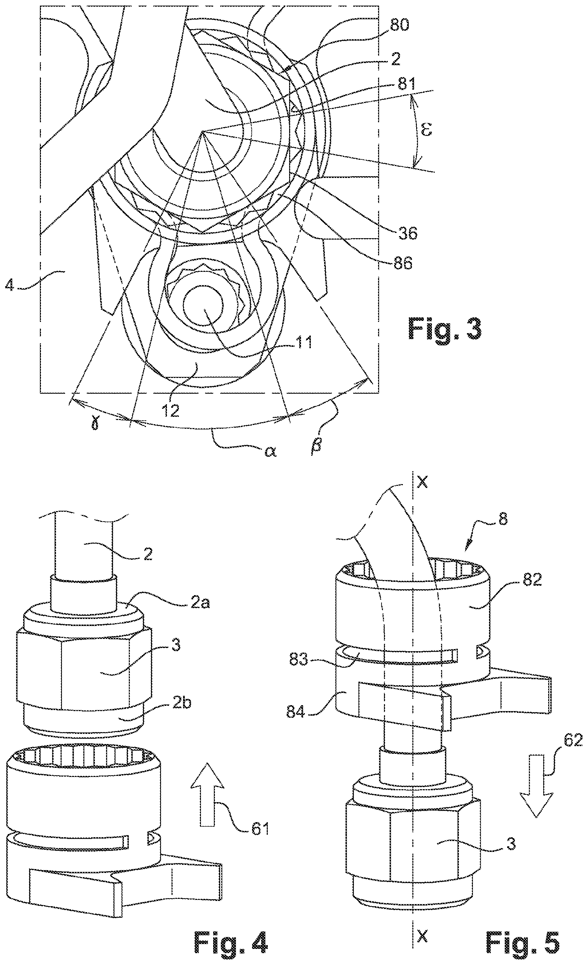

L'ensemble comprend un premier conduit d'huile 2 qui est raccordé à un deuxième conduit d'huile 6 par un écrou 3. L'extrémité inférieure 2a du premier conduit 2 comporte l'écrou 3 et une gorge 2b, représentée à la figure 4, qui est située au niveau de la partie inférieure de l'écrou 3.

Dans l'ensemble de la description, les termes « inférieur » et « supérieur» sont définis, de façon relative l'un par rapport à l'autre, en relation avec les figures. Dans le mode de réalisation représenté, une partie « inférieure » d'un élément est plus proche de l'axe longitudinal de la turbomachine 1 que la partie « supérieure » du même élément.

En outre, sauf précision contraire, les adjectifs et adverbes « axial », et « radial » sont utilisés pour définir des directions par rapport l'axe X-X de l'écrou. Une direction axiale est une direction qui est parallèle à l'axe de l'écrou X-X, tandis qu'une direction radiale est orthogonale à l'axe de l'écrou X-X.

Le deuxième conduit 6 se situe dans le prolongement du premier conduit 2. Il est fixe par rapport au carter 4 qu'il traverse. Il est entouré par une enveloppe 5 filetée, de manière à ce que le deuxième conduit 6 et l'enveloppe 5 forment une partie mâle qui est enserrée par l'écrou 3.

L'ensemble comporte aussi une plaque de freinage 7 située autour de l'enveloppe 5 et qui est au contact mécanique du carter 4.

Cette plaque 7 est solidarisée au carter 4 par une vis de serrage 11. Elle forme une embase 12 pour l'organe d'arrêt en rotation 8 de l'écrou, qui est décrit- ci-après.

Une rondelle 13 est située entre l'embase 12 et la tête de la vis 11. La rondelle 13 et la tête de vis 11 forment conjointement un organe en saillie 10 du carter 4 et de la plaque de freinage 7.

L'écrou 3 est entouré par son organe d'arrêt en rotation 8 qui est enserré par une goupille cavalier 9. L'organe d'arrêt en rotation 8 et la goupille cavalier 9 forment conjointement un dispositif de limitation de desserrage de l'écrou 3.

L'organe d'arrêt en rotation 8 comprend un corps principal 80 qui a sensiblement une forme de bague annulaire, à l'exception d'un premier ergot 87 et d'un deuxième ergot 89. Le corps principal 80 est situé autour du premier conduit 2.

Le corps principal 80 comprend une partie supérieure 82, une partie inférieure 84 et une gorge 83 entre la partie supérieure 82 et la partie inférieure 84.

La partie supérieure 82 entoure l'écrou 3. Elle comprend une surface interne 81 tri hexagonale qui est en regard d'une surface externe 31 hexagonale de l'écrou 3. Les dents 86 de la surface interne 81 engagent mécaniquement les dents 36 délimitées par la surface externe 31. L'engagement de ces dents 36, 86 limite une rotation de l'écrou 3 relativement à l'organe d'arrêt en rotation 8.

L'étendue angulaire maximale de desserrage γ de l'écrou 3 est au plus égale à l'étendue angulaire ε entre deux dents 86 consécutives de la surface interne 81 du corps principal 80.

L'étendue angulaire maximale de desserrage γ est par exemple comprise entre 0°, lorsque la marge de montage β de l'organe d'arrêt en rotation 8 relativement à l'écrou 3 est égale à 20° environ, et 20°, lorsque cette marge de montage β est égale à 0° environ.

La partie inférieure 84 a un corps en forme de bague annulaire. La partie inférieure 84 comprend les deux ergots 87, 89 qui sont en saillie radialement vers l'extérieur de ce corps.

La partie inférieure 84 prend appui sur la plaque de freinage 7 en dessous des ergots 87, 89. La plaque de freinage 7 est alors une butée axiale de la partie inférieure 84.

Le premier ergot 87 et le deuxième ergot 89 sont espacés l'un de l'autre le long d'une direction circonférentielle du corps principal 80. La vis 11 est destinée à être située entre le premier ergot 87 et le deuxième ergot 89.

Le premier ergot 87 et le deuxième ergot 89 limitent une rotation de l'organe d'arrêt en rotation 8 relativement au carter 4. Ils jouent ainsi le rôle de butée anti-rotation de l'organe d'arrêt en rotation 8 relativement au carter 4. La vis 11 forme alors une contrebutée anti-rotation pour l'organe d'arrêt en rotation 8.

L'organe d'arrêt en rotation 8 est relié de manière détachable à l'écrou 3, au carter 4 et à la plaque de freinage 7.

L'étendue angulaire γ + β + α entre les deux ergots 87, 89 est supérieure ou égale à l'étendue angulaire α de la vis 11. Elle est de préférence supérieure ou égale à la somme de l'étendue angulaire α de la vis 11 et de l'étendue angulaire ε entre deux dents 86 consécutives de l'organe d'arrêt en rotation 8, afin de faciliter la mise en place de l'organe d'arrêt en rotation 8 autour de l'écrou 3.

L'étendue angulaire α de la vis 11 est par exemple de 30°. L'étendue angulaire γ + β + α entre les deux ergots 87, 89 est par exemple de 50°.

La gorge 83 est une rainure qui traverse le corps principal 80 sur la majorité de la circonférence du corps principal 80.

Cette gorge 83 loge la goupille cavalier 9. Elle est située dans la partie inférieure de l'écrou 3, en regard de la gorge 2b lorsque l'organe d'arrêt en rotation 8 est en place autour de l'écrou 3.

La goupille cavalier 9 est située sous l'écrou 3, lorsque le dispositif de limitation de desserrage a été mis en place. Elle enserre le corps principal 80 et elle enserre l'écrou 3 au niveau de sa gorge 2b.

La goupille cavalier 9 est reliée de manière détachable à l'organe d'arrêt en rotation 8 et à l'écrou 3.

Elle empêche une translation de l'organe d'arrêt en rotation 8 relativement à l'écrou 3 le long de l'axe de l'écrou X-X.

Le procédé de montage du dispositif de limitation de desserrage est illustré en référence aux figures 4 à 6.

Tout d'abord, l'organe d'arrêt en rotation 8 est inséré le long de l'écrou 3 depuis le dessous de l'extrémité inférieure 2a vers le haut, selon la flèche 61.

L'organe d'arrêt en rotation 8 est situé au-dessus de l'extrémité 2a du premier conduit 2 lors du serrage de l'écrou 3, de manière à faciliter l'accès à l'écrou 3 pour raccorder le premier conduit 2 et le deuxième conduit 6.

Une fois que l'écrou 3 a été serré, l'organe d'arrêt en rotation 8 est dirigé vers le bas selon la flèche 62, de manière à ce que la partie supérieure 82 entoure l'écrou 3. La partie inférieure prend appui sur la plaque de freinage 7. L'organe en saillie 10 est situé entre les deux ergots 87, 89, en étant apte à venir en butée en rotation contre les ergots 87, 89.

La goupille cavalier 9 est alors insérée dans la gorge 83 entre la partie supérieure 82 et la partie inférieure 84 de l'organe d'arrêt en rotation 8. L'organe d'arrêt en rotation 8 est alors bloqué en translation selon l'axe de l'écrou X-X. Il est également serré autour de l'extrémité 2a de l'écrou 3.

Bien entendu, diverses modifications peuvent être apportées par l'homme du métier à l'invention qui vient d'être décrite sans sortir du cadre de l'exposé de l'invention.

Les ergots 87, 89 peuvent coopérer avec la tête de la vis 11 et/ou une partie de la tige de la vis 11 pour limiter la rotation de l'organe d'arrêt en rotation 8 relativement au support 4.

Par exemple, le premier conduit 2 et le deuxième conduit 6 peuvent acheminer de l'air de purge, du carburant ou tout autre type de fluide, au lieu de l'huile. Par ailleurs, le deuxième conduit 6 peut prendre la forme d'un orifice traversant le carter 4, sans qu'il se prolonge de part et d'autre du carter 4.

L'écrou 3 peut être relié de manière détachable au premier conduit 2, au lieu de faire partie du premier conduit 2.

L'organe d'arrêt en rotation 8 pourrait également limiter d'autres types de mouvements de l'écrou 3 relativement au support 4, en plus d'un mouvement de rotation de l'écrou 3 relativement au support 4.

La surface interne 81 est tri-hexagonale mais elle pourrait également être hexagonale, afin de limiter une rotation de l'écrou 3 par complémentarité de forme avec la surface externe 31 de l'écrou.

De manière générale, la surface interne 81 et la surface externe 31 sont conformées de manière à caler en rotation l'écrou 3 et l'organe d'arrêt en rotation 8.

Elles sont notamment conformées de manière à ce que l'étendue angulaire maximale de desserrage γ de l'écrou 3 soit inférieure à l'étendue angulaire ε entre deux dents 86 consécutives de l'organe d'arrêt en rotation 8.

La goupille cavalier 9 est susceptible d'être remplacée par un autre type de goupille, par une agrafe, un clip et/ou un jonc.

Elle peut également être située ailleurs que dans la gorge 83, par exemple au-dessus de l'organe d'arrêt en rotation 8, en enserrant le premier conduit d'huile 2.

Dans ce cas, l'organe d'arrêt en rotation 8 peut même être dépourvu de gorge 83.

## Revendications

1. Ensemble pour turbomachine (1), comprenant :
un support (4) comprenant une partie mâle filetée (5),
un organe en saillie (10) du support (4), en étant solidaire du support (4),
un écrou (3) enserrant la partie mâle (5), et
un dispositif de limitation de desserrage de l'écrou (8, 9) relativement au support (4), **caractérisé en ce que** l'organe en saillie (10) comprend une vis (11), le dispositif de limitation de desserrage (8, 9) comprenant :
un organe d'arrêt en rotation (8) configuré pour limiter une rotation de l'écrou (3) relativement au support (4), l'organe d'arrêt en rotation (8) comprenant :
une bague (80) annulaire entourant l'écrou (3),
un premier ergot (87) et un deuxième ergot (89) qui sont en saillie radialement vers l'extérieur d'un corps de la bague (80), les ergots (87, 89) étant espacés l'un de l'autre le long d'une direction circonférentielle de la bague (80),
la bague (80) comprenant une surface interne (81) configurée pour limiter une rotation de l'écrou (3) par coopération de forme avec une surface externe (31) de l'écrou,
l'organe d'arrêt en rotation (8) étant configuré pour retenir la vis (11) entre les ergots (87, 89), chacun des ergots (87, 89) étant configuré pour former une butée anti-rotation pour la vis (11), de manière à limiter une rotation de l'organe d'arrêt en rotation (8) relativement au support (4),
le dispositif de limitation de desserrage (8, 9) comprenant un organe d'arrêt en translation (9) configuré pour limiter une translation de l'organe d'arrêt en rotation (8) relativement à l'écrou (3), selon l'axe de l'écrou (X-X).

2. Ensemble selon la revendication 1, dans lequel l'étendue angulaire (γ + β + α) entre les deux ergots (87, 89) est supérieure ou égale à la somme de l'étendue angulaire (α) de la vis (11) et d'un angle (ε) entre deux côtés consécutifs de l'organe d'arrêt en rotation (8).

3. Ensemble selon l'une quelconque des revendications 1 et 2, comprenant une plaque de freinage (7) en contact du support (4) et de l'organe d'arrêt en rotation (8), la plaque de freinage (7) étant solidarisée au support par la vis (11).

4. Ensemble selon l'une quelconque des revendications 1 à 3, dans lequel la surface interne (81) est polygonale, pour coopérer avec une surface externe (31) hexagonale de l'écrou (3).

5. Ensemble selon la revendication 4, dans lequel la surface interne (81) est multi hexagonale.

6. Ensemble selon l'une quelconque des revendications 1 à 5, dans lequel la bague (80) comprend une ouverture (83), pour loger au moins partiellement l'organe d'arrêt en translation (9).

7. Ensemble selon la revendication 6, dans lequel l'ouverture (83) comprend une gorge.

8. Ensemble selon l'une quelconque des revendications 1 à 7, dans lequel l'organe d'arrêt en translation (9) comprend un organe de serrage.

9. Ensemble selon la revendication 8, l'organe de serrage (9) comprenant une goupille, une agrafe, un clip et/ou un jonc.

10. Turbomachine (1) comprenant un ensemble selon l'une quelconque des revendications 1 à 9, l'écrou (3) raccordant un conduit d'huile (2) à une partie mâle (5, 6) qui est solidaire d'un carter (4) de turbomachine.

11. Procédé de montage d'un dispositif de limitation de desserrage d'un ensemble selon l'une quelconque des revendications 1 à 9, comprenant :
une étape d'insertion de l'organe d'arrêt en rotation (8) autour de l'écrou (3) et de montage de la vis (11) entre le premier ergot (87) et le deuxième ergot (89), et
une étape de montage de l'organe d'arrêt en translation (9), pour que l'organe d'arrêt en translation (9) limite une translation de l'organe d'arrêt en rotation (8) relativement à l'écrou (3) selon l'axe de l'écrou (X-X).

## Patentansprüche

1. Gesamtanordnung für Turbotriebwerke (1), welche umfasst:
- einen Träger (4), der ein männliches Gewindeteil (5) aufweist,
- ein von dem Träger (4) überstehendes Organ (10), das fest mit dem Träger (4) verbunden ist,
- eine Mutter (3), die das männliche Gewindeteil (5) umschließt, und
- eine Vorrichtung zur Begrenzung des Lösens der Mutter (8, 9) von dem Träger (4),
**dadurch gekennzeichnet,**
**dass** das überstehende Organ (10) eine Schraube (11) umfasst, wobei die Vorrichtung zur Begrenzung des Lösens (8, 9) enthält:
ein Drehsperrorgan (8), das konfiguriert ist, um eine Drehbewegung der Mutter (3) gegenüber dem Träger (4) zu begrenzen, wobei das Drehsperrorgan (8) aufweist:
- eine ringförmige Hülse (80), die die Mutter (3) umgibt,
- eine erste Nase (87) und eine zweite Nase (89), die von einem Körper der Hülse (80) radial nach außen hervorstehen, wobei die Nasen (87, 89) in einer Umfangsrichtung der Hülse (80) voneinander in Abstand angeordnet sind,
wobei die Hülse (80) eine Innenfläche (81) aufweist, die dazu geformt ist, eine Drehbewegung der Mutter (3) durch Formschluss mit einer Außenfläche (31) der Mutter zu begrenzen,
wobei das Drehsperrorgan (8) dazu gebildet ist, die Schraube (11) zwischen den Nasen (87, 89) festzuhalten, wobei jede der Nasen (87, 89) gestaltet ist, um einen Drehsperr-Anschlag für die Schraube (11) zu bilden, so dass eine Drehbewegung des Drehsperrorgans (8) gegenüber dem Träger (4) begrenzt wird,
wobei die Vorrichtung zur Begrenzung des Lösens (8, 9) ein Vorschub-Sperrorgan (9) enthält, das konfiguriert ist, um eine Vorschubbewegung des Drehsperrorgans (8) gegenüber der Mutter (3) auf der Achse der Mutter (X-X) zu begrenzen.

2. Gesamtanordnung nach Anspruch 1, bei der die Winkelweite (*γ* + *β* + *α*) zwischen den beiden Nasen (87, 89) größer oder gleich der Summe der Winkelweite (*α*) der Schraube (11) und eines Winkels (*ε*) zwischen zwei aufeinanderfolgenden Seiten des Drehsperrorgans (8) ist.

3. Gesamtanordnung nach einem der Ansprüche 1 und 2, die eine Bremsplatte (7) in Kontakt mit dem Träger (4) und dem Drehsperrorgan (8) enthält, wobei die Bremsplatte (7) durch die Schraube (11) fest mit dem Träger (4) verbunden wird.

4. Gesamtanordnung nach einem der Ansprüche 1 bis 3, bei der die Innenfläche (81) mehreckig ist, um mit einer Sechskant-Außenfläche (31) der Mutter (3) zusammenzuwirken.

5. Gesamtanordnung nach Anspruch 4, bei der die Innenfläche (81) multihexagonal ist.

6. Gesamtanordnung nach einem der Ansprüche 1 bis 5, bei der die Hülse (80) eine Öffnung (83) aufweist, um zumindest teilweise das Vorschub-Sperrorgan (9) aufzunehmen.

7. Gesamtanordnung nach Anspruch 6, bei der die Öffnung (83) aus einer Auskehlung besteht.

8. Gesamtanordnung nach einem der Ansprüche 1 bis 7, bei der das Vorschub-Sperrorgan (9) aus einem Schließorgan besteht.

9. Gesamtanordnung nach Anspruch 8, bei der das Schließorgan (9) aus einem Stift, einem Schließhaken, einem Clip und/oder einem Schließring besteht.

10. Turbotriebwerk (1), das eine Gesamtanordnung nach einem der Ansprüche 1 bis 9 aufweist, wobei die Mutter (3) eine Ölleitung (2) an ein männliches Teil (5, 6) anschließt, welches fest mit einem Gehäuse (4) des Turbotriebwerks verbunden ist.

11. Verfahren zum Einbau einer Vorrichtung zur Begrenzung eines Lösens einer Gesamtanordnung nach einem der Ansprüche 1 bis 9, bestehend aus:
- einem Verfahrensschritt des Einsetzens des Drehsperrorgans (8) um die Mutter (3) herum und des Anbringens der Schraube (11) zwischen der ersten Nase (87) und der zweiten Nase (89), und
- einem Verfahrensschritt des Anbringens des Vorschub-Sperrorgans (9), damit das Vorschub-Sperrorgan (9) eine Vorschubbewegung des Drehsperrorgans (8) gegenüber der Mutter (3) auf der Achse der Mutter (X-X) begrenzt.

## Claims

1. An assembly for a turbine engine (1), comprising:
a mount (4) comprising a threaded male portion (5),
a projecting member (10) projecting from the mount (4), wherein the projecting member (10) is secured to the mount (4),
a nut (3) clamping around the male portion (5), and
a device for limiting loosening of the nut (8, 9) relative to the mount (4),
**characterised in that** the projecting member (10) comprises a screw (11),
wherein the loosening limitation device (8, 9) comprises:
a rotation locking member (8) configured to limit rotation of the nut (3) relative to the mount (4), wherein the rotation locking member (8) comprises:
an annular ring (80) surrounding the nut (3),
a first lug (87) and a second lug (89) that radially project outwards from a body of the ring (80), wherein the lugs (87, 89) are spaced apart from one another in a circumferential direction of the ring (80),
wherein the ring (80) comprises an inner surface (81) configured to limit rotation of the nut (3) by shape engagement with an outer surface (31) of the nut,
wherein the rotation locking member (8) is configured to retain the screw (11) between the lugs (87, 89), wherein each of the lugs (87, 89) is configured to form an anti-rotation abutment for the screw (11), so as to limit rotation of the rotation locking member (8) relative to the mount (4),
wherein the device for limiting loosening (8, 9) comprises a translation locking member (9) configured to limit translation of the rotation locking member (8) relative to the nut (3), along the axis of the nut (X-X).

2. The assembly according to claim 1, wherein the angular range (γ + β + α) between the two lugs (87, 89) is greater than or equal to the sum of the angular range (α) of the screw (11) and an angle (ε) between two consecutive sides of the rotation locking member (8).

3. The assembly according to claim 1 or claim 2, comprising a brake plate (7) in contact with the mount (4) and the rotation locking member (8), wherein the brake plate (7) is secured to the mount by the screw (11).

4. The assembly according to any of the preceding claims 1 to 3, wherein the inner surface (81) is polygonal in order to engage with an outer hexagonal surface (31) of the nut (3).

5. The assembly according to claim 4, wherein the inner surface (81) is multi-hexagonal.

6. The assembly according to any of the preceding claims 1 to 5, wherein the ring (80) comprises an opening (83) for at least partially housing the translation locking member (9).

7. The assembly according to claim 6, wherein the opening (83) comprises a groove.

8. The assembly according to any of the preceding claims 1 to 7, wherein the translation locking member (9) comprises a clamping member.

9. The assembly according to claim 8, wherein the clamping member (9) comprises a pin, a clasp, a clip and/or a circlip.

10. A turbine engine (1) comprising an assembly according to any of the preceding claims 1 to 9, wherein the nut (3) connects an oil line (2) to a male portion (5, 6) that is secured to a turbine engine casing (4).

11. A method for assembling a loosening limitation device of an assembly according to any of claims 1 to 9, wherein the method comprises the steps of:
inserting the rotation locking member (8) around the nut (3) and mounting the screw (11) between the first lug (87) and the second lug (89), and
mounting the translation locking member (9) such that the translation locking member (9) limits translation of the rotation locking member (8) relative to the nut (3), along the axis of the nut (X-X).
